# EUROPÄISCHE PATENTANMELDUNG

(11) **EP 2 450 663 A1**
(43) Veröffentlichungstag der Anmeldung: **09.05.2012**
(21) Anmeldenummer: 11187595.1
(22) Anmeldetag: 03.11.2011
(51) Int. Cl.: G01B 11/25, G01N 21/88, G01N 21/956, G01R 31/308, G06T 7/00

(54) **Verfahren und Anordnung zur Korrektur von Messpositionen von zur Inspektion elektronischer Flachbaugruppen aufgenommener Messbilder**

(30) Priorität: 04.11.2010 DE 102010050445
(71) Anmelder: Göpel electronic GmbH, 07745 Jena (DE)
(72) Erfinder: Hacke, André, 07973 Greiz (DE); Rabich, Stephan, 07749 Jena (DE)
(74) Vertreter: Oehmke, Volker

(57) **Zusammenfassung**

Die Erfindung betrifft ein Verfahren und eine Vorrichtung zur Korrektur von Messpositionen von Messbildern elektronischer Flachbaugruppen, bei dem eine Lichtlinie mit breitbandigem Licht mit Wellenlänge zwischen 300 und 800 nm und unter einem einstellbaren Polarwinkel (15) > 0° und 90° und einem einstellbaren Azimutwinkel (14) projiziert wird, dass ein Bild der Lichtlinie mit einer Videokamera (1) einer rotatorischen Bildaufnahmeeinheit (A) unter einem einstellbaren Azimutwinkel (14) aufgenommen wird, dass eine Lage des Bildes der auf das Kalibrierungsobjekt projizierten Lichtlinie bezüglich zweier Bezugsachsen eines Bezugssystems als Kalibrierungsdatensatz erfasst, mittels Regressionen n-ter Ordnung in eine Kalibrierungsfunktion überführt und gespeichert wird, dass eine Lage des Bildes der auf das Messobjekt projizierten Lichtlinie als Messdatensatz erfasst, mittels Regressionen n-ter Ordnung in eine Prüflingsfunktion überführt und gespeichert wird und dass die auftretenden Differenzen zwischen der Kalibrierungsfunktion und der Prüflingsfunktion erfasst und zur Korrektur der Messpositionen der Messbilder in der Videokamera (1) verwendet werden.

## Beschreibung

Elektronische Flachbaugruppen durchlaufen im Fertigungsprozess die technologischen Schritte: Pastendruck, Bestücken und Löten. Nach dem Löten werden typischerweise die elektronischen Flachbaugruppen mittels eines automatischen optischen Inspektionsgerätes auf Fertigungsfehler geprüft.

Dabei stellt die Kontrolle der Lötstellen eine besondere Herausforderung dar. Die Zuverlässigkeit der Lötstellenprüfung ist abhängig vom Informationsgehalt des durch eine Videokamera aufgenommen Bildes.

Um die Zuverlässigkeit der Lötstellenkontrolle zu erhöhen, ist eine Verbesserung der Bildaufnahme- und Beleuchtungseinheit notwendig. Dazu gehört, dass neben einer verbesserten Beleuchtung die zu untersuchenden Objekte mit verschiedenen Azimut- und Polarwinkeln betrachtet werden können.

Dabei ist angestrebt, Lagefehler der zu inspizierenden Flachbaugruppe bei der Aufnahme von Messbildern, anhand derer die eigentliche Inspektion erfolgt, auszugleichen. Solche Lagefehler können beispielsweise durch nicht exakte Orthogonalität einer Bildaufnahmeeinheit zu einer Flachbaugruppe bei der Montage bzw. beim Betrieb (z. B. Fertigungstoleranzen, Langzeitveränderungen) und der Durchbiegung der zu prüfenden Flachbaugruppe während der Inspektion bedingt sein.

Aus der Patentliteratur sind Lösungsvorschläge für die Kompensation der Durchbiegung, Neigung und/oder Kippung von Leiterplatten bekannt, welche es ermöglichen, Inspektionen unter einem, gegenüber der Flachbaugruppe vertikal geneigten, Blickwinkel (fortan: Polarwinkel) und unabhängig von den genannten Lageabweichungen zu ermöglichen. Zur Aufnahme vom Messbildern ist die Flachbaugruppe in einer Betrachtungsebene angeordnet.

In der Patentschrift DE 699 26 885 T2 wird ein Verfahren zur Messung und Kompensation der Durchbiegung bei der Inspektion von bestückten Leiterplatten sowie eine Anordnung zur Durchführung des Verfahrens vorgestellt, bei welchem neben einer orthogonalen Kamera, mindestens eine, maximal jedoch vier, fest angeordnete, **geneigte Kameras und ein** I R-Laserlinienmodul zur Leiterplatteninspektion eingesetzt werden. Die geneigten Kameras sind unter Polarwinkeln von 30° um eine senkrecht auf der Flachbaugruppe stehende zentrale Achse unter gleichen Azimutwinkeln angeordnet. Vier geneigte Kameras sind daher um je 90° zueinander versetzt und beispielsweise unter den Azimutwinkeln 0°, 90°, 180° und 270° angeordnet. Nahe bei der zentralen Achse und zu dieser unter einem kleinen Winkel angeordnet ist ein IR-Lasermodul zur Projektion einer Laserlinie auf ein Kalibrierungsobjekt oder ein Messobjekt in einer Betrachtungsebene vorhanden. Die Aufnahmerichtung der orthogonale Kamera verläuft entlang der zentralen Achse auf die Betrachtungsebene.

Von der auf ein Kalibrierungsobjekt bzw. auf ein Messobjekt projizierten Lichtlinie wird jeweils mittels der orthogonalen Kamera ein Bild erfasst, einer Recheneinheit (fortan: Speicher- und Verrechnungseinheit) zugeführt und von dieser verarbeitet. Aus den ermittelten Linienkoordinaten kann die Durchbiegung der Flachbaugruppe und somit der zu erwartende laterale Bildversatz bei einer Verwendung der geneigten Kameras bestimmt und entsprechend kompensiert werden.

Nachteilig bei einer Anordnung gemäß der DE 699 26 885 T2 sind die starre Aufteilung der Azimutwinkel und der sich durch den hohen Materialeinsatz (eine Kamera- Objektiveinheit pro Azimutwinkel) ergebende hohe Kostenaufwand. Im Weiteren führt der feste azimutale Projektionswinkel des IR-Lasermoduls dieser Anordnung dazu, dass Abschattungseffekte, hervorgerufen durch Bauelemente auf den zu untersuchenden Leiterplatten, nicht berücksichtigt werden können. Für die Vermessung der Lichtlinie wird zusätzlich eine orthogonale Kamera-Objektiveinheit benötigt. Dies ist kostenbedingt ein nicht zu vernachlässigender Faktor und schränkt die Wettbewerbsfähigkeit weiter ein. Durch die geringe Differenz des azimutalen Projektionswinkels zwischen IR-Lasermodul und zentraler Achse ergibt sich bei dieser zudem eine geringe Messempfindlichkeit. Somit eignet sich dieses System nur bedingt zur genauen Höhenbestimmung von z. B. Bauelementen.

Ein weiteres, nicht zu vernachlässigendes Phänomen, welches die Messgenauigkeit der Anordnung negativ beeinflusst, ist das Auftreten einer ungleichmäßigen Beleuchtung über den Querschnitt eines Lasers, der sogenannten Granulation oder "speckles".

Durch die Anmelderin selbst ist eine Anordnung einer rotatorischen Bildaufnahmeeinheit für die Abbildung von Objekten auf Leiterplatten unter einem polaren Betrachtungswinkel von 45° (Polarwinkel) beschrieben (DE 10 2009 017 694.2), die dadurch gekennzeichnet ist, dass eine bildgebende Baugruppe bestehend aus einer Kabelzuführung, einer Videokamera, einem Adapter, einem Objektiv, einem Spiegel, einer Spiegel-Beleuchtungseinheit, einer Beleuchtungseinheit, einer Steuer- und Regeleinheit, einem Abdeckglas und einer Streuscheibe, als Ganzes in einem Winkel zwischen 0° bis 360° (Azimutwinkel) drehbar angeordnet ist; die Videokamera durch einen Adapter geneigt zur Betrachtungsebene angeordnet ist; zur Rotation der bildgebenden Baugruppe ein elektrischer Antrieb vorhanden ist; die Faltung des Strahlengangs über die Anordnung der beiden Spiegel derart erfolgt, dass ein Polarwinkel von 45° eingestellt ist; die Beleuchtung senkrecht und/oder in Richtung des Strahlenganges erfolgt und die Ansteuerung der Videokamera, der Spiegel-Beleuchtungseinheit, der Beleuchtungseinheit, elektrischen Antrieb durch die in die Baugruppe integrierte Steuer- und Regeleinheit erfolgt.

Vorteilhaft an dieser Anordnung ist der Umstand, dass unter verschiedenen Azimutwinkeln mit nur einer Kamera Bilder aufgenommen werden können.

Der Erfindung liegt die Aufgabe zugrunde, eine Möglichkeit anzugeben, wie mit geringem apparativen Aufwand eine effiziente Korrektur von Lagefehlern von zu inspizierenden elektronischen Flachbaugruppen bei der Aufnahme von Messbildern erfolgen kann.

Die Aufgabe ist in einem Verfahren zur Korrektur von Messpositionen von zur Inspektion elektronischer Flachbaugruppen aufgenommener Messbilder, bei dem:
- eine Lichtlinie unter einem Winkel auf ein in einer Betrachtungsebene vorhandenes Kalibrierungsobjekt projiziert, mittels einer Kamera ein Bild der Lichtlinie aufgenommen und das Bild gespeichert wird;
- die Lichtlinie auf ein Messobjekt projiziert, mittels einer Kamera ein Bild der Lichtlinie aufgenommen und das Bild gespeichert wird;
- die Bilder der aufgenommenen Lichtlinien verglichen werden und
- anhand der Differenzen zwischen den Lichtlinien der Bilder die Korrekturen erfolgen, dadurch gelöst,
- dass die Lichtlinie mit breitbandigem Licht mit Wellenlänge zwischen 300 und 800 nm und unter einem einstellbaren Polarwinkel > 0° und 90° und einem einstellbaren Azimutwinkel projiziert wird,
- dass ein Bild der Lichtlinie mit einer Videokamera einer rotatorischen Bildaufnahmeeinheit unter einem einstellbaren Azimutwinkel aufgenommen wird,
- dass eine Lage des Bildes der auf das Kalibrierungsobjekt projizierten Lichtlinie bezüglich zweier Bezugsachsen eines Bezugssystems als Kalibrierungsdatensatz erfasst, mittels Regressionen n-ter Ordnung in eine Kalibrierungsfunktion überführt und gespeichert wird, wobei eine erste Bezugsachse in der Betrachtungsebene weisend ist und eine zweite Bezugsachse senkrecht auf der ersten Bezugsachse steht,
- dass eine Lage des Bildes der auf das Messobjekt projizierten Lichtlinie bezüglich der Bezugsachsen als Messdatensatz erfasst, mittels Regressionen n-ter Ordnung in eine Prüflingsfunktion überführt und gespeichert wird und
- dass die hinsichtlich ihrer in Richtung der zweiten Bezugsachse auftretenden Differenzen zwischen der Kalibrierungsfunktion und der Prüflingsfunktion erfasst und zur Korrektur der Messpositionen der Messbilder in der Videokamera verwendet werden.

Die projizierte Lichtlinie soll durch ein Licht gebildet werden, das kein Laserlicht ist, insbesondere keine Eigenschaften, wie z. B. Kohärenz des Lichtes, aufweist, durch welche die bei reinem Laserlicht bekannten "speckles" auftreten. Das Licht der Lichtlinie kann aus mehreren Wellenlängen zwischen 300 und 800 nm gebildet sein. In einer bevorzugten Ausführung des erfindungsgemäßen Verfahrens wird die Lichtlinie aus weißem Licht gebildet.

In weiteren Ausführungen der Erfindung können statt der Lichtlinie regelmäßige, zweidimensionale Lichtmuster, wie z. B. Gitter, projiziert werden.

Mittels des erfindungsgemäßen Verfahrens zu korrigierende Lagefehler sind in erster Linie unerwünschte Nick- und Kippeffekte sowie jegliche ungewollte Abstandsänderungen zwischen der Betrachtungsebene und der Bildaufnahmeeinheit des rotatorischen Bildaufnahmesystems und den daraus resultierenden Bildverschiebungen, wie beispielsweise laterale x-y-Verschiebungen des gewünschten Bildbereiches im Kamerabild. Zudem können Durchbiegungen der Flachbaugruppen erfasst und bei der Auswahl des Bildbereiches korrigiert werden.

Mittels einer Projektionseinheit werden regelmäßige Lichtmuster auf das Kalibrierungsobjekt oder das Messobjekt abgebildet und mit einer rotatorischen Bildaufnahmeeinheit unter einem Polarwinkel von beispielsweise 45° abgetastet. Diese Abtastungen werden automatisch ausgewertet und für eine Positionskorrektur der Bildbereiche der rotatorischen Bildaufnahmeeinheit verwendet.

Die Korrektur erfolgt nach der Bildaufnahme softwareseitig durch eine angepasste Bildentzerrungs- und Kalibrierfunktion. Hierbei wird der aufgenommene Bildbereich während des Entzerrungsvorganges in einer Datenverarbeitungseinheit, z. B. einem PC, neu zentriert und ausgerichtet, sodass der Bildbereich in eine Sollposition überführt wird.

Im Weiteren gestattet diese Anordnung auch eine Höhenvermessung der zu inspizierenden Objekte auf der Flachbaugruppe, was für bestimmte Prüfaufgaben sehr vorteilhaft ist.

Beispielsweise treten bei der Fertigung von elektronischen Baugruppen nach dem Lötvorgang an integrierten Schaltkreisen sogenannte "lifted leads" auf (einzelne oder ganze Pinreihen am integrierten Schaltkreis sind nach oben gebogen), welche nicht oder nur unzureichend gelötet sind. Mittels der Höhenvermessungsfunktion können während der Prüfung der Baugruppe einzelne Pins bzw. die Pinreihen hinsichtlich ihrer Höhe relativ zur Oberfläche der Flachbaugruppe überprüft werden. Damit kann bei kritischen Bauteilen neben anderen Prüfverfahren die Prüftiefe erhöht und die Pseudofehlerrate gesenkt werden.

Es ist im Sinne einer effizienten Durchführung des erfindungsgemäßen Verfahrens, wenn die Kalibrierungsfunktion für eine Anzahl von Korrekturen verwendet wird. Dazu kann die Kalibrierungsfunktion beispielsweise wiederholt aus einem Speicher abgerufen und verrechnet werden.

Die Regressionen n-ter Ordnung werden vorzugsweise wiederholt und solange unter Eliminierung der jeweils betragsmäßig größten Daten berechnet, bis die Regressionen n-ter Ordnung keine Funktionswerte mehr aufweisen, die größer als ein vorbestimmter Schwellwert sind. Durch eine solche Ausgestaltung können die technisch tatsächlich umsetzbaren Zustellwege an die auszugleichenden Lagefehler angenähert werden.

Durch die Wahl der einen oder der anderen Bezugsachse als Abszisse bzw. als Ordinate kann die Richtung, in der die Kalibrierungsfunktion sowie die Messfunktion ermittelt werden, bestimmt werden.

Vorzugsweise wird nach einer Inspektion eines Bereiches der Flachbaugruppe eine Relativbewegung zwischen der Flachbaugruppe und der rotatorischen Bildaufnahmeeinheit erzeugt, um Inspektionen über die gesamte Flachbaugruppe zu ermöglichen.

Vorteilhaft an dem erfindungsgemäßen Verfahren ist, dass geometrische Beziehungen der rotatorischen Bildaufnahmeeinheit bestehen bleiben und sich die Korrektur direkt auf ein gewonnenes Messbild bezieht. Dadurch sind mechanische Zustell- **und Ausgleichsbewegungen** sowie die dazu notwendigen Steuerungsfunktionen und Mittel in der rotatorischen Bildaufnahmeeinheit nicht erforderlich.

Weitere Anwendungen sind die Inspektion von flächenhaften Objekten, wie zum Beispiel Solarmodule und Wafer in der Halbleiterfertigung.

Die Aufgabe wird außerdem in einer Anordnung einer rotatorischen Bildaufnahmeeinheit zur Durchführung des erfindungsgemäßen Verfahrens, bei der mit einer bildgebenden Baugruppe bestehend aus einer Kabelzuführung, einer Videokamera, einem Adapter, einem Objektiv, einem Spiegel, einer Spiegel-Beleuchtungseinheit, einer Beleuchtungseinheit, einer Steuer- und Regeleinheit, einem Abdeckglas und einer Streuscheibe, die als Ganzes in einem Azimutwinkel zwischen 0° bis 360° drehbar angeordnet ist, Bilder von in einer Betrachtungsebene vorhandenen Objekten einer Flachbaugruppe in einer Aufnahmerichtung aufgenommen werden, wobei die Videokamera durch einen Adapter geneigt zur Betrachtungsebene angeordnet ist; ein elektrischer Antrieb zur Rotation der bildgebenden Baugruppe vorhanden ist; die Faltung des Strahlengangs derart erfolgt, dass ein polarer Betrachtungswinkel (Polarwinkel) eingestellt ist; die Beleuchtung senkrecht und/oder in Richtung des Strahlenganges erfolgt und die Ansteuerung **der Videokamera,der Spiegel**-Beleuchtungseinheit, der Beleuchtungseinheit und des elektrischen Antriebs durch die in die Baugruppe integrierte Steuer- und Regeleinheit erfolgt,
dadurch gelöst,
- dass eine Projektionseinheit zur Projektion einer Lichtlinie mit breitbandigem Licht aufweisend Wellenlängen zwischen 300 und 800 nm und unter einem einstellbaren Polarwinkel zwischen > 0° und 90° in die Betrachtungsebene entlang einer Projektionsrichtung vorhanden ist;
- dass die rotatorische Bildaufnahmeeinheit über die Steuer- und Regeleinheit mit einer Speicher- und Verrechnungseinheit zur Speicherung und Verrechnung des Kalibrierungsdatensatzes und des Messdatensatzes verbunden ist;
- dass Mittel zur Einstellung des Polarwinkels und des Azimutwinkels vorhanden und mit der Steuer- und Regeleinheit verbunden sind und
- dass Mittel zur Synchronisation der Aufnahmezeitpunkte und Aufnahmedauern der Videokamera und der Projektionseinheit vorhanden sind.

Das Objektiv ist dabei ein Objektiv, ausgewählt aus einer Gruppe umfassend entozentrische Objektive, telezentrische Objektive und Zoom-Objektive.

Vorzugsweise ist eine durch Polarwinkel und Azimutwinkel gegebene Aufnahmerichtung hinsichtlich ihres Azimutwinkels um 180° zu einem Azimutwinkel der Projektionsrichtung gegeben. Durch eine solche Ausführung ist eine hohe Genauigkeit bei der Höhenmessung von Objekten erreichbar.

Der Azimutwinkel der Aufnahmerichtung kann in einem beliebig wählbaren Winkelbereich zwischen 0° und 360° einstellbar sein. Es kann ein Referenznormal auf der Flachbaugruppe vorhanden sein, durch welches die Lage der Lichtlinie ermittelbar ist.

In einer bevorzugten Ausführung der Anordnung ist die Projektionseinheit mit einer breitbandigen LED (lichtemittierende Diode) ausgerüstet, durch die weißes Licht ausgesendet wird. Mit einer solchen Ausführung können nachteilige "specke"-Effekte stark reduziert oder gar vermieden werden.

Die Projektionseinheit kann beispielsweise eine Zylinderlinsenoptik oder Beugungsstrukturen zur Formung des Lichtes aufweisen.

In der Beleuchtungseinheit können LED's vorhanden sein, die Licht mit verschiedenen Wellenlängen aussenden. Außerdem ist es möglich, dass nur in einer Wellenlänge emittierende LED's vorhanden sind.

Die Beleuchtungseinheit kann so angesteuert sein, dass eine Beleuchtung mittels Dauerlicht erfolgt. Es ist auch möglich, dass die Beleuchtung als Lichtblitz synchron zur Bildaufnahme der Videokamera angesteuert ist.

Der elektrische Antrieb kann als Hohlwellenmotor mit oder ohne Anschlag zur Wegbegrenzung ausgeführt sein. Der elektrische Antrieb kann weiterhin mit einem Wegmesssystem zur Erkennung und Regelung insbesondere seines Azimutwinkels, ausgeführt werden. Er kann dabei als ein elektrischer Schrittmotor, als ein elektrischer AC- oder DC-Servomotor, als ein rotatorischer Motor oder als Linearmotor ausgeführt sein.

Der elektrische Antrieb kann auch als ein Motor ohne Hohlwelle ausgeführt sein.

Eine Drehbewegung der rotatorischen Bildaufnahmeeinheit kann pneumatisch ausgestaltet sein.

Eine Ansteuerung des Antriebes, der Beleuchtung und der Videokamera können in die erfindungsgemäße Anordnung integriert oder aber in einer weiteren Ausführung außerhalb der Anordnung angeordnet sein.

Es ist auch möglich, dass die rotatorische Bildaufnahmeeinheit in einem festen Azimutwinkel angeordnet ist.

Die erfindungsgemäße Anordnung ist vorzugsweise so gestaltet, dass der Polarwinkel durch eine Ausrichtung und Gestaltung der Spiegeleinheit und einer einstellbaren Schrägstellung der Videokamera einzustellen ist. Der Polarwinkel ist dabei auf jeden Wert zwischen 0° und 90° einstellbar.

Zur Faltung des Strahlenganges kann eine Anordnung von Spiegeln, ein Prisma oder eine Spiegel-Prisma-Baugruppe vorhanden sein.

Die Videokamera kann eine Matrixkamera oder eine Zeilenkamera sein. Ferner ist auch eine Verwendung positionsempfindlicher Dioden oder ähnlicher Halbleitersensoren möglich.

Die Kabelzuführung kann über eine Kabelschleppbaugruppe oder über ein Schleifkontaktsystem realisiert sein.

Energie und Signale können über ein Wireless-, Schleifkontakt- oder ein Kabelschleppsystem oder über eine Kombination dieser Systeme zuführbar sein.

Es ist von Vorteil, wenn die erfindungsgemäße Anordnung aktiv kühlbar ist und beispielsweise Lüfter oder Peltierelemente enthält.

Die Erfindung wird nachfolgend anhand von Abbildungen und Ausführungsbeispielen näher erläutert. Es zeigt:

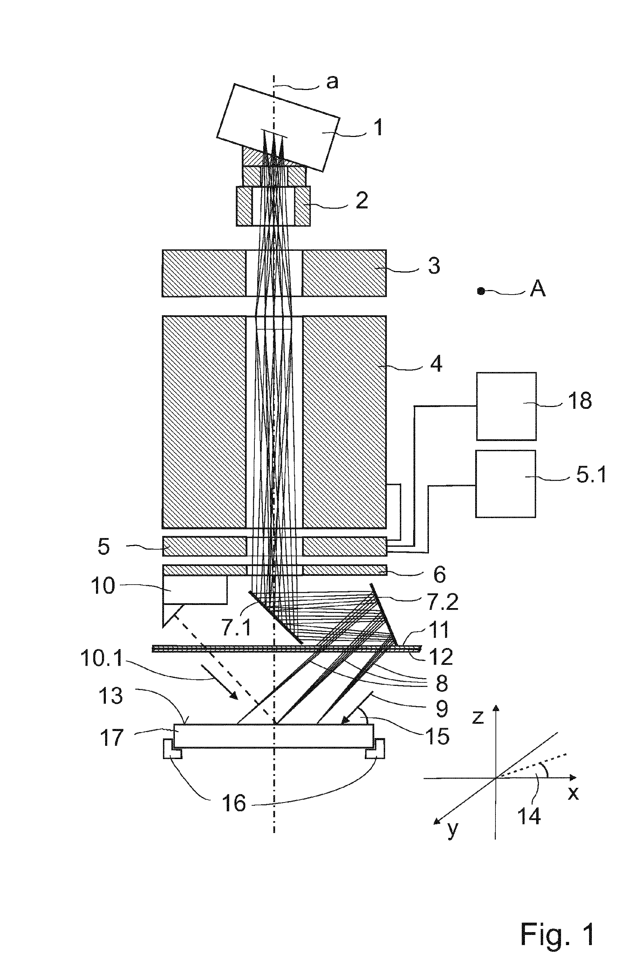

Fig. 1 eine erste Ausführung der erfindungsgemäßen Vorrichtung.

In einer in Fig. 1 gezeigten ersten Ausführung der erfindungsgemäßen Vorrichtung sind als wesentliche Elemente eine Videokamera 1 mit einem vorgeordneten Objektiv 3, ein Hohlwellenmotor 4, eine Steuer- und Regeleinheit 5, eine Beleuchtungseinheit 6 und eine Projektionseinheit 10 als Elemente einer rotatorischen Bildaufnahmeeinheit A sowie eine Prüflingsaufnahme 16 vorhanden, die so ausgebildet ist, dass eine zu prüfende Oberfläche eines in der Prüflingsaufnahme 16 gehaltenen Prüflings 17 in einer Betrachtungsebene 13 zu liegen kommt.

Die Betrachtungsebene 13 ist durch eine x-y-Ebene eines kartesischen Koordinatensystems bestimmt. Die als Matrixkamera ausgebildete Videokamera 1 ist in einem definierten Winkel gegenüber der Betrachtungsebene 13 geneigt und mittels eines Adapters 2 mit dem Objektiv 3 verbunden, welches senkrecht zur Betrachtungsebene 13, und damit in Richtung der z-Achse, ausgerichtet ist. In einem Strahlengang 8 zwischen Betrachtungsebene 13 und Videokamera 1 sind Spiegel 7.1 und 7.2 so angeordnet, dass durch diese eine Faltung des Strahlenganges 8 so bewirkt wird, dass eine Aufnahme unter einem Polarwinkel 15 von 45° zur Betrachtungsebene 13 erfolgt.

Die Steuer- und Regeleinheit 5 ist mit einer Speicher- und Verrechnungseinheit 5.1 sowie mit dem Hohlwellenmotor 4 verbunden.

Dem Spiegel 7.2 ist eine Streuscheibe 11 und ein Abdeckglas 12 nachgeordnet.

Die rotatorische Bildaufnahmeeinheit A ist um eine in Längsrichtung und koaxial der z-Achse des kartesischen Koordinatensystems verlaufenden Symmetrieachse a unter beliebig einstellbaren Azimutwinkeln von 0° bis 360° drehbar. Sie ist ferner an einem x-y-Positioniersystems 18 (nur angedeutet gezeigt) befestigt, mittels dem die rotatorische Bildaufnahmeeinheit A parallel zur Betrachtungsebene 13 verfahrbar und bestimmten Positionen zustellbar ist. Das x-y-Positioniersystem 18 steht mit der Steuer- und Regeleinheit 5 in Verbindung

Der Strahlengang 8 verläuft zwischen rotatorischer Bildaufnahmeeinheit A und Betrachtungsebene 13 in einer Aufnahmerichtung 9, die durch Polarwinkel 15 und Azimutwinkel 14 bestimmt ist.

Die Projektionseinheit 10 ist außerhalb des Strahlengangs 8 angeordnet und so gestaltet, dass durch diese eine Lichtlinie weißen Lichts in die Betrachtungsebene 13 projizierbar ist. Die Projektion der Lichtlinie erfolgt entlang einer Projektionsrichtung 10.1, die durch ihren Polarwinkel 15 und ihren Azimutwinkel 14 bestimmt ist. Die Aufnahmerichtung 9 und die Projektionsrichtung 10.1 weisen um 180° voneinander verschiedene Azimutwinkel 14 auf.

Zur Durchführung des erfindungsgemäßen Verfahrens wird die rotatorische Bildaufnahmeeinheit A einem bestimmten Azimutwinkel 14 zugestellt und mittels der Beleuchtungseinheit 6 ein Bereich eines in der Prüflingsaufnahme 16 gehaltenen Kalibrierobjekts (nicht gezeigt) beleuchtet. Dazu werden durch die Speicher- und Verrechnungseinheit 5.1 Steuerbefehle an die Steuer- und Regeleinheit 5 übermittelt, welche Informationen über die x-und y-Position eines aufzunehmenden Betrachtungsfeldes des Kalibrierobjektes, den Azimutwinkel 14, unter dem ein Bild aufgenommen werden soll und die Art der Beleuchtung durch die Beleuchtungseinheit 6 umfassen. Die Steuer- und Regeleinheit 5 sendet Verfahrbefehle an das x-y-Positioniersystem 18 und den Hohlwellenmotor 4. Nach Erreichen der gewünschten x-y-Position und nach Einstellung des gewünschten Azimutwinkels 14 wird mittels der Projektionseinheit 10 eine Lichtlinie auf das Kalibrierobjekt projiziert. Zudem wird durch die Steuer- und Regeleinheit 5 die Beleuchtungseinheit 6 und die Videokamera 1 eingeschaltet. Mit der Videokamera 1 der rotatorischen Bildaufnahmeeinheit A wird ein Bild aufgenommen.

Nach Beendigung der Bildaufnahme durch die Videokamera 1 werden die Bilddaten an die Speicher- und Verrechnungseinheit 5.1 übermittelt. Die Lage der Lichtlinie in dem aufgenommenen Bild wird bezüglich der als Bezugsachsen definierten x- und y-Achsen des kartesischen Koordinatensystems erfasst. Die erfasste Lage der Lichtlinie wird mittels Regressionen n-ter Ordnung in eine Kalibrierungsfunktion überführt und gespeichert.

Das Kalibrierungsobjekt wird gegen den Prüfling 17, nämlich eine elektronische Flachbaugruppe, ausgetauscht und die Projektion der Lichtlinie, die Bildaufnahme sowie die Regression n-ter Ordnung unter den gleichen Bedingungen wie bei dem Kalibrierungsobjekt durchgeführt.

Die erzeugte Kalibrierungsfunktion und die Prüflingsfunktion werden miteinander verglichen. Die bei dem Vergleich festgestellten Differenzen zwischen den jeweiligen Wertepaaren der Kalibrierungsfunktion und der Prüflingsfunktion werden nach Betrag und Richtung erfasst und dienen zur Korrektur der Messpositionen des Bildes in der Videokamera 1.

In einer weiteren Ausführung des erfindungsgemäßen Verfahrens wird die Regressionen n-ter Ordnung solange unter Eliminierung der jeweils betragsmäßig größten Daten wiederholt, bis die Regressionen n-ter Ordnung keine Funktionswerte mehr aufweisen, die größer als ein vorbestimmter Schwellwert sind.

Das erfindungsgemäße Verfahren und die erfindungsgemäße Vorrichtung kann zur Steigerung der Effizienz von Inspektionen von Prüflingen 17, insbesondere von elektronischen Flachbaugruppen, eingesetzt werden.

### Bezugszeichenliste

- 1: Videokamera
- 2: Adapter
- 3: Objektiv
- 4: Hohlwellenmotor
- 5: Steuer- und Regeleinheit
- 5.1: Speicher- und Verrechnungseinheit
- 6: Beleuchtungseinheit
- 7.1: Spiegel
- 7.2: Spiegel
- 8: Strahlengang
- 9: Aufnahmerichtung
- 10: Projektionseinheit
- 10.1: Projektionsrichtung
- 11: Streuscheibe
- 12: Abdeckglas
- 13: Betrachtungsebene
- 14: Azimutwinkel
- 15: Polarwinkel
- 16: Prüflingsaufnahme
- 17: Prüfling
- 18: x-y-Positioniersystem
- A: rotatorische Bildaufnahmeeinheit a Symmetrieachse

## Patentansprüche

1. Verfahren zur Korrektur von Messpositionen von zur Inspektion elektronischer Flachbaugruppen aufgenommener Messbilder, bei dem:
- eine Lichtlinie unter einem Winkel auf ein in einer Betrachtungsebene vorhandenes Kalibrierungsobjekt projiziert, mittels einer Kamera ein Bild der Lichtlinie aufgenommen und das Bild gespeichert wird;
- die Lichtlinie auf ein Messobjekt projiziert, mittels einer Kamera ein Bild der Lichtlinie aufgenommen und das Bild gespeichert wird;
- die Bilder der aufgenommenen Lichtlinien verglichen werden und
- anhand der Differenzen zwischen den Lichtlinien der Bilder die Korrekturen erfolgen, **dadurch gekennzeichnet,**
- **dass** die Lichtlinie mit breitbandigem Licht mit Wellenlänge zwischen 300 und 800 nm und unter einem einstellbaren Polarwinkel (15) > 0° und 90° und einem einstellbaren Azimutwinkel (14) projiziert wird,
- **dass** ein Bild der Lichtlinie mit einer Videokamera (1) einer rotatorischen Bildaufnahmeeinheit (A) unter einem einstellbaren Azimutwinkel (14) aufgenommen wird,
- **dass** eine Lage des Bildes der auf das Kalibrierungsobjekt projizierten Lichtlinie bezüglich zweier Bezugsachsen eines Bezugssystems als Kalibrierungsdatensatz erfasst, mittels Regressionen n-ter Ordnung in eine Kalibrierungsfunktion überführt und gespeichert wird, wobei eine erste Bezugsachse in der Betrachtungsebene (13) weisend ist und eine zweite Bezugsachse senkrecht auf der ersten Bezugsachse steht,
- **dass** eine Lage des Bildes der auf das Messobjekt projizierten Lichtlinie bezüglich der Bezugsachsen als Messdatensatz erfasst, mittels Regressionen n-ter Ordnung in eine Prüflingsfunktion überführt und gespeichert wird und
- **dass** die hinsichtlich ihrer in Richtung der zweiten Bezugsachse auftretenden Differenzen zwischen der Kalibrierungsfunktion und der Prüflingsfunktion erfasst und zur Korrektur der Messpositionen der Messbilder in der Videokamera (1) verwendet werden.

2. Verfahren nach Anspruch 1, **dadurch gekennzeichnet, dass** die Wellenlängen so gewählt werden, dass die Lichtlinie durch weißes Licht gebildet ist.

3. Verfahren nach Anspruch 1 oder 2, **dadurch gekennzeichnet, dass** die Kalibrierungsfunktion für eine Anzahl von Korrekturen verwendet wird.

4. Verfahren nach Anspruch 3, **dadurch gekennzeichnet, dass** als Polarwinkel (15) ein Winkel von 45° gewählt wird.

5. Verfahren nach Anspruch 3 oder 4, **dadurch gekennzeichnet, dass** die Regressionen n-ter Ordnung solange unter Eliminierung der jeweils betragsmäßig größten Daten wiederholt werden, bis die Regressionen n-ter Ordnung keine Funktionswerte mehr aufweisen, die größer als ein vorbestimmter Schwellwert sind.

6. Verfahren nach einem der vorhergehenden Ansprüche, **dadurch gekennzeichnet, dass**
statt der Lichtlinie regelmäßige, zweidimensionale Lichtmuster projiziert werden.

7. Anordnung einer rotatorischen Bildaufnahmeeinheit zur Durchführung des Verfahrens nach den Ansprüchen 1 bis 6, für die Abbildung von Objekten auf Leiterplatten unter einem polaren Betrachtungswinkel mit einer bildgebenden Baugruppe bestehend aus einer Kabelzuführung, einer Videokamera, einem Adapter, einem Objektiv, einem Spiegel, einer Spiegel-Beleuchtungseinheit, einer Beleuchtungseinheit, einer Steuer- und Regeleinheit, einem Abdeckglas und einer Streuscheibe, die als Ganzes in einem Azimutwinkel zwischen 0° bis 360° drehbar angeordnet ist, wobei die Videokamera durch einen Adapter geneigt zur Betrachtungsebene angeordnet ist; ein elektrischer Antrieb zur Rotation der bildgebenden Baugruppe vorhanden ist; die Faltung des Strahlengangs über eine Anordnung zweier Spiegel derart erfolgt, dass ein Polarwinkel eingestellt ist; die Beleuchtung senkrecht und/oder in Richtung des Strahlenganges erfolgt und die Ansteuerung der Videokamera, der Spiegel-Beleuchtungseinheit, der Beleuchtungseinheit und des elektrischen Antriebs durch die in die Baugruppe integrierte Steuer- und Regeleinheit erfolgt,
**dadurch gekennzeichnet,**
- **dass** eine Projektionseinheit (10) zur Projektion einer Lichtlinie mit breitbandigem Licht aufweisend Wellenlängen zwischen 300 und 800 nm und unter einem einstellbaren Polarwinkel (15) zwischen > 0° und 90° in die Betrachtungsebene (13) entlang einer Projektionsrichtung (10.1) vorhanden ist;
- **dass** die rotatorische Bildaufnahmeeinheit (A) über die Steuer- und Regeleinheit (5) mit einer Speicher- und Verrechnungseinheit (5.1) zur Speicherung und Verrechnung des Kalibrierungsdatensatzes und des Messdatensatzes verbunden ist;
- **dass** Mittel zur Einstellung des Polarwinkels (15) und des Azimutwinkels (14) vorhanden und mit der Steuer- und Regeleinheit (5) verbunden sind und
- **dass** Mittel zur Synchronisation der Aufnahmezeitpunkte und Aufnahmedauern der Videokamera (1) und der Projektionseinheit (10) vorhanden sind.

8. Anordnung nach Anspruch 7, **dadurch gekennzeichnet, dass** das Objektiv (3) ein Objektiv (3) ausgewählt aus einer Gruppe umfassend entozentrische Objektive, telezentrische Objektive und Zoom-Objektive ist.

9. Anordnung nach Anspruch 7 oder 8, **dadurch gekennzeichnet, dass** eine durch Azimutwinkel (14) und Polarwinkel (15) gegebene Aufnahmerichtung (9) hinsichtlich ihres Azimutwinkels (14) um 180° zu einem Azimutwinkel (14) der Projektionsrichtung (10.1) angeordnet ist.

10. Anordnung nach einem der Ansprüche 7 bis 9, **dadurch gekennzeichnet, dass** der Azimutwinkel (14) in einem beliebig wählbaren Winkelbereich zwischen 0° und 360° einstellbar ist.
